Europäisches Patentamt

European Patent Office

Office européen des brevets

(19)

(11) Veröffentlichungsnummer: **0 111 726**

**A1**

(12) **EUROPÄISCHE PATENTANMELDUNG**

(21) Anmeldenummer: **83111173.7**

(22) Anmeldetag: **09.11.83**

(51) Int. Cl.³: **B 65 G 47/32**
**B 65 G 47/54**

(30) Priorität: **18.11.82 DE 3242484**

(43) Veröffentlichungstag der Anmeldung:
**27.06.84 Patentblatt 84/26**

(84) Benannte Vertragsstaaten:
**AT BE CH FR GB IT LI LU NL SE**

(71) Anmelder: **Hemag Maschinenbau Ing. A.u.F. Manasek OHG**
**Langgarten 32**
**D-6900 Heidelberg-Kirchheim(DE)**

(72) Erfinder: **Manasek, Artur**
**Langgarten 32**
**D-6900 Heidelberg-Kirchheim(DE)**

(74) Vertreter: **Liebau, Gerhard, Dipl.-Ing.**
**Birkenstrasse 39**
**D-8900 Augsburg 22(DE)**

(54) **Transportvorrichtung für längliche Werkstücke.**

(57) Eine Transportvorrichtung für längliche Werkstücke (W) unterschiedlicher Länge besteht im wesentlichen aus einem Längsförderer (1), auf welchem die Werkstücke in ihrer Längsrichtung transportiert werden, und einem an diesem senkrecht anschließenden Querförderer (5), auf welchem mehrere Werkstücke quer zu ihrer Längsrichtung bis gegen einen Festanschlag (8) transportiert werden. Ein Endschalter (12) ist parallel zum Längsförderer (1) verschiebbar gelagert. Sobald das vordere Werkstückende (WV) auf dem Längsförderer (1) die Längsmittelebene (M-M) des Querförderers (5) erreicht hat, wird der Endschalter (12) durch einen Antrieb (13-16) von seiner Ausgangsposition in der Nähe der Längsmittelebene (M-M) entgegengesetzt zur Förderrichtung (L) des Längsförderers (1) mit einer dessen Fördergeschwindigkeit entsprechenden Geschwindigkeit verschoben. Beim Ertasten des hinteren Werkstückendes (WH) setzt der Endschalter (12) den Längsförderer (1) still und schaltet den Querförderer (5) ein.

Fig.1

Transportvorrichtung für längliche Werkstücke.

Die Erfindung betrifft eine Transportvorrichtung für längliche Werkstücke unterschiedlicher Länge, insbesondere für
Rahmenteile für Fenster- und Türrahmen, bestehend im
wesentlichen aus einem von einem ersten Antriebsmotor
angetriebenen Längsförderer, auf welchem die Werkstücke
nacheinander in ihrer Längsrichtung transportiert werden,
und aus einem, an einer Übergabestation an diesen senkrecht
anschließenden, von einem zweiten Antriebsmotor angetriebenen Querförderer, auf welchem mehrere Werkstücke gleichzeitig quer zu ihrer Längsrichtung bis gegen einen an einer
Abgabestation angeordneten Festanschlag transportiert werden, wobei im Bereich des Längsförderers ein von dem jeweils auf diesem transportierten Werkstück betätigbarer
Endschalter vorgesehen ist, der in Abhängigkeit von einer
vorbestimmten Stellung des jeweils transportierten Werkstückes den ersten Antriebsmotor stillsetzt und den zweiten Antriebsmotor einschaltet.

Eine derartige bekannte Transportvorrichtung wird beispielsweise bei der Herstellung von Fenster- oder Türrahmen
eingesetzt. Die Transportvorrichtung kann dabei vor einer
sogenannten Rahmenpresse angeordnet sein, an welcher die
Rahmenteile zu einem Rahmen zusammengesetzt und aneinandergepreßt werden. Die senkrechten und die waagerechten Rahmenteile des späteren Fenster- oder Türrahmens weisen dabei
im allgemeinen unterschiedliche Längen auf, sie müssen jedoch, damit sie an der Rahmenpresse zur Verfügung stehen,
unmittelbar aufeinanderfolgend auf dem Querförderer transportiert werden. außerdem können nacheinander zusammengefügte Rahmen ganz unterschiedliche Abmessungen aufweisen.
Auf dem Querförderer müssen also längliche Werkstücke mit
den unterschiedlichsten Längen transportiert werden.

Eine bekannte Transportvorrichtung war nun so ausgebildet,
daß jedes Werkstück auf dem Längsförderer bis zu einem festen Endanschlag transportiert wurde und daß ein dort vorgesehener Endschalter dann den ersten Antriebsmotor des Längsförderers stillgesetzt und den zweiten Antriebsmotor des Querförderers eingeschaltet hat. Der im Pilgerschrittverfahren arbeitende Querförderer weist heb- und senkbare, sowie in ihrer Längsrichtung bewegliche Transportleisten und parallel zu diesen verlaufende Ablageleisten auf, wobei sich Transportleisten und Ablageleisten in Förderrichtung des Querförderers, jedoch quer zur Längsrichtung der Werkstücke erstrecken. Durch die Transportleisten wird das jeweils auf dem Längsförderer transportierte Werkstück von diesem abgehoben, quer zu seiner Längsrichtung transportiert und dann auf den Ablageleisten abgesetzt. Anschließend kehren die Transportleisten unterhalb der Ablageebene der Ablageleisten und der Förderebene des Längsförderers wieder in ihre Ausgangsstellung zurück. Bei jeder Transportbewegung der Transportleisten werden auch sämtliche bereits vorher auf den Ablageleisten abgelegten Werkstücke um einen Schritt weiterbewegt, bis das vorderste Werkstück an dem Festanschlag anstößt. Wenn nun auf dem Querförderer Werkstücke unterschiedlicher Länge transportiert werden und sich die Werkstücke an dem Festanschlag stauen, dann stellen sich bei der bekannten Transportvorrichtung die Werkstücke allmählich schräg zur Förderrichtung, was zu Störungen führt. Dies ist darauf zurückzuführen, daß an dem einen Ende des Querförderers, wo die vorderen Enden der Werkstücke liegen, die Werkstücke dicht an dicht angeordnet sind. Bei unterschiedlich langen Werkstücken sind jedoch zwischen den hinteren Enden jeweils Zwischenräume vorhanden. Unter der Wirkung der dort befindlichen Transportleisten werden die hinteren Enden der Werkstücke, da sie sich gegenseitig nicht abstützen, allmählich einander genähert, was zu der erwähnten Schrägstellung der Werkstücke führt.

Es ist ferner eine Einrichtung zum Übernehmen und Weitertransportieren von dicht hintereinander ankommenden Werkstücken, insbesondere plattenförmigen Werkstücken bekannt
(DE-OS 28 35 862), bei welcher die in einem Paket übereinanderliegenden Platten auf einem Auflagetisch taktweise
vorgeschoben und durch eine Kreissäge getrennt werden.
Die abgesägten Platten werden dann dicht Fuge an Fuge
liegend auf dem Auflagetisch von den nachfolgenden Platten
weitergeschoben. Am Ende des Auflagetisches ist ein in
Verschieberichtung der Platten beweglicher, mit einer heb-
und senkbaren Plattform versehener, Transportwagen vorgesehen. An dem Wagen ist eine Meß- bzw. Abtasteinrichtung angeordnet. Beim Unterfahren der vorderen Werkstückkante
wird die Meßeinrichtung aktiviert und es beginnt die Messung. Nachdem der vorher der Meßeinrichtung eingegebene
Wert erreicht ist, stopt der Wagen, und die Plattform wird
angehoben. Bei dieser vorbekannten Einrichtung werden die
einzelnen Werkstücke durch den Transportwagen immer nur
in der gleichen, der Verschieberichtung entsprechenden,
Richtung weitertransportiert. Außerdem ist es erforderlich,
die Länge jeder einzelnen Platte in die Meßeinrichtung einzugeben.

Der Erfindung liegt die Aufgabe zugrunde, eine Transportvorrichtung für längliche Werkstücke unterschiedlicher
Länge, insbesondere Rahmenteile für Fenster- und Türrahmen
der eingangs erwähnten Art zu schaffen, bei der mit einfachen Mitteln sichergestellt ist, daß die Werkstücke auf
dem Querförderer immer parallel zueinander und parallel
zu dem Festanschlag weitertransportiert werden und auch
bei einem Stau am Festanschlag ihre parallele Lage beibehalten.

Diese Aufgabe wird nach der Erfindung dadurch gelöst, daß
der Endschalter parallel zum Längsförderer verschiebbar
gelagert ist, daß zur Verschiebung des Endschalters ein
Antrieb vorgesehen ist, der von dem vorderen Ende des jeweils auf dem Längsförderer transportierten Werkstückes
eingeschaltet wird, sobald dessen vorderes Ende etwa
die Längsmittelebene des Förderers erreicht hat, und der
den Endschalter von seiner Ausgangsposition in der Nähe
der Längsmittelebene entgegengesetzt zur Förderrichtung
des Längsförderers mit einer dessen Fördergeschwindigkeit
entsprechenden Geschwindigkeit verschiebt, daß der Endschalter bei seiner Verschiebung das jeweils transportierte Werkstück abtastet und beim Ertasten dessen hinteren
Endes den ersten Antriebsmotor stillsetzt und den zweiten
Antriebsmotor einschaltet, und daß eine Rückführeinrichtung vorgesehen ist, welche den Endschalter anschließend
wieder in seine Ausgangsposition zurückverschiebt.

Mit dieser verhältnismäßig einfachen Ausgestaltung der
Fördervorrichtung wird erreicht, daß die unterschiedlich
langen Werkstücke auf dem Querförderer immer parallel zueinander und parallel zum Festanschlag weiterbewegt werden
und daß sie ihre parallele Lage auch dann beibehalten,
wenn sich die Werkstücke, wie gewollt, an dem Festanschlag
stauen. Durch die bewegliche Anordnung des Endschalters
und seinen Antrieb, der ihn mit gleicher Geschwindigkeit wie das Werkstück, jedoch in entgegengesetzter Richtung verschiebt, erreicht der Endschalter das hintere Ende des jeweils auf dem Längsförderer transportierten Werkstückes, sobald sich dessen vorderes Ende von der Längsmittelebene des Querförderers in annähernd gleichem Abstand befindet wie das hintere Ende des Werkstückes. Die Werkstücksmitte befindet sich also in diesem Augenblick in etwa in der Längsmittelebene des Querförderers. Da durch den Endschalter in diesem Augenblick der Antriebsmotor des Längsförderers stillgesetzt wird, verbleibt das auf dem Längsförderer transportierte Werkstück in seiner gegenüber der Längsmittelebene des Querförderers ausgemittelten Lage und wird dann durch Einschalten des Antriebsmotors des Querförderers von dessen Transportleisten übernommen. Alle folgenden Werkstücke werden in der gleichen Weise gegenüber der Längsmittelebene des Querförderers ausgemittelt und in dieser Lage auf dem Querförderer weitertransportiert. Wenn sich die Werkstücke an dem Festanschlag stauen, so liegen sie in ihrem mittleren Bereich unabhängig von ihrer unterschiedlichen Länge stets dicht an dicht aneinander. Da die Abstützung in Bezug auf die Längsmittelebene symmetrisch erfolgt, spielt es nun keine Rolle, daß zwischen den forderen Enden bzw. den hinteren Enden aneinanderliegenderWerkstücke Zwischenräume vorhanden sind. Die jeweils auf die vorderen bzw. hinteren Enden durch die Transportleisten einwirkenden Kräfte sind gleich groß und können infolge der gleichmäßigen gegenseitigen Abstützung der Werkstücke in ihrem mittleren Bereich zu keiner Schrägstellung der Werkstücke führen.

Weitere vorteilhafte Ausgestaltungen der Erfindung sind in den Unteransprüchen gekennzeichnet.

Die Erfindung ist in folgendem anhand von in der Zeichnung dargestellten Ausführungsbeispielen näher erläutert.

- 5 -

Es zeigen:

Figur 1 eine Draufsicht auf ein erstes Ausführungsbeispiel
(mit einer möglichen Abwandlung)

Figur 2 eine Teildraufsicht auf ein zweites Ausführungsbeispiel.

Der Längsförderer 1 weist mehrere Transportrollen 2 auf, die von einem ersten Antriebsmotor 3 über eine Kette 4, einen Zahnriemen od. dgl. antreibbar sind. Mit dem Längsförderer 1 können Werkstücke W in ihrer Längsrichtung in Förderrichtung L transportiert werden. Bei den länglichen Werkstücken kann es sich um Rahmenteile für Fenster- und Türrahmen handeln, beispielsweise solche aus Holz, wobei die nacheinander transportierten Werkstücke W ganz unterschiedliche Längen aufweisen können. Da bei bestimmten Herstellungsverfahren für Fenster- und Türrahmen aus Holz die beiden beim fertigen Fenster bzw. der fertigen Tür einander zugeordneten Rahmenteile der Fenster- bzw. Türblendrahmen einerseits und der Fenster- bzw. Türflügelrahmen andererseits lösbar miteinander verbunden, anschließend an ihren Enden und an ihren Längsseiten bearbeitet und dann in verbundenem Zustand bis zu einer Rahmenpresse gebracht werden (vgl. deutsches Patent 22 01 613), werden unter einem Werstück auch zwei derartige zusammengeklammerte Rahmenteile eines Blendrahmens und eines Flügelrahmens verstanden. Die zusammengehörigen Rahmenteile weisen zwar nach der Bearbeitung unterschiedliche Längen auf, sind jedoch in zusammengeklammertem Zustand infolge gleichmäßiger Bearbeitung an beiden Enden gegeneinander ausgemittelt.

Senkrecht zum Längsförderer 1 erstreckt sich der Querförderer 5, auf welchem die Werkstücke W quer zu ihrer Längsrichtung in Richtung Q transportiert werden. Der Querförderer weist mehrere sich parallel zur Förderrichtung Q erstreckende Transportleisten 6 auf und zwischen diesen Transportleisten stationäre Ablageleisten 7. Am Ende der Ablageleisten 7 ist ein Festanschlag 8 vorgesehen. Die Transportleisten 6 werden von einem zweiten Antriebsmotor 9 in bekannter Weise im Pilgerschrittverfahren angetrieben. Sie führen dabei eine über die Ablageebene der stationären Ablageleisten 7 hinausgehende Hubbewegung, anschließend eine Transportbewegung in Richtung Q und daran anschließend eine Senkbewegung aus, wobei sie unter die Ablageebene der Ablageleisten·7 eintauchen. Unterhalb der Ablageleisten 7 bewegen sich dann die Transportleisten entgegengesetzt zur Förderrichtung Q wieder in ihre Ausgangsposition zurück. Im Bereich des Längsförderers 1 greifen die Transportleisten zwischen die Rollen 2 ein und sind gegenüber der Transportebene dieser Rollen 2 in gleicher Weise anhebbar und verschiebbar wie gegenüber den Ablageleisten 7. Soweit die Transportvorrichtung bisher beschrieben wurde, ist sie vorbekannt. Anstelle des im Pilgerschrittverfahren arbeitenden Querförderers 5 könnte der Querförderer auch mehrere in Förderrichtung Q parallel zueinander verlaufende Förderbänder aufweisen, die zum Zwecke der Übergabe der Werkstücke vom Längsförderer 1 auf den Querförderer relativ zur Förderebene des Längsförderers heb- und senkbar sein müssen.

Auf einer sich parallel zur Förderrichtung L des Längsförderers 1 erstreckenden Führungsbahn 10 ist ein Schlitten 11 verschiebbar gelagert, der einen mit dem jeweils auf dem Längsförderer 1 transportierten Werkstück W zusammenarbeitenden Endschalter 12 trägt. Ein endloses Zugglied 13, dessen beide Trume 13a und 13b sich ebenfalls parallel zur Förderrichtung L erstrecken und welches über die beiden Umlenkscheiben 14 und 15 geführt ist, bildet einen Teil des Antriebes für den den Endschalter 12 tragenden Schlitten 11. Das Trum 13a des Zuggliedes 13 ist mit dem Schlitten 11 verbunden. Für den Antrieb der Umlegscheibe 14 ist bei einer ersten Ausführungsform der Erfindung ein dritter Antriebsmotor 16 vorgesehen. Dieser dritte Antriebsmotor 16 ist so ausgewählt, daß er den Schlitten 11 mit dem Endschalter 12 mit einer Geschwindigkeit antreiben kann, die der Fördergeschwindigkeit des Längsförderers 1 entspricht, jedoch in entgegengesetzter Richtung. Der Endschalter 12 steuert in Abhängigkeit von dem jeweils transportierten Werkstück W die Antriebsmotoren 3, 9 und 16. Die Anordnung ist weiterhin so getroffen, daß der Endschalter sich in seiner Ausgangsposition in oder in der Nähe der Längsmittelebene M-M des Querförderers 5 befindet. Außerdem ist der Endschalter 12 so angeordnet, daß er das jeweils auf dem Längsförderer 1 transportierte Werkstück W abtasten kann.

Die Wirkungsweise der bisher beschriebenen Vorrichtung ist folgende:

Bei eingeschaltetem ersten Antriebsmotor 3 wird ein Werkstück W, welches eine beliebige Länge aufweisen kann, in Richtung L gefördert. Sobald das vordere Ende WV des Werkstückes W in etwa die Längsmittelebene M erreicht hat, wird das vordere Ende WV von dem Endschalter 12 ertastet. Bei dem Endschalter 12 handelt es sich vorzugsweise um eine Fotozelle zu einer berührungslosen Abtastung. Anstelle einer Fotozelle kann auch ein kapazitiv oder induktiv arbeitender Endschalter vorgesehen sein, falls dies das Werkstück zuläßt, oder es ist auch die Verwendung eines mechanisch arbeitenden Endschalters möglich. Bevorzugt wird jedoch eine Fotozelle als Endschalter 12 verwendet.

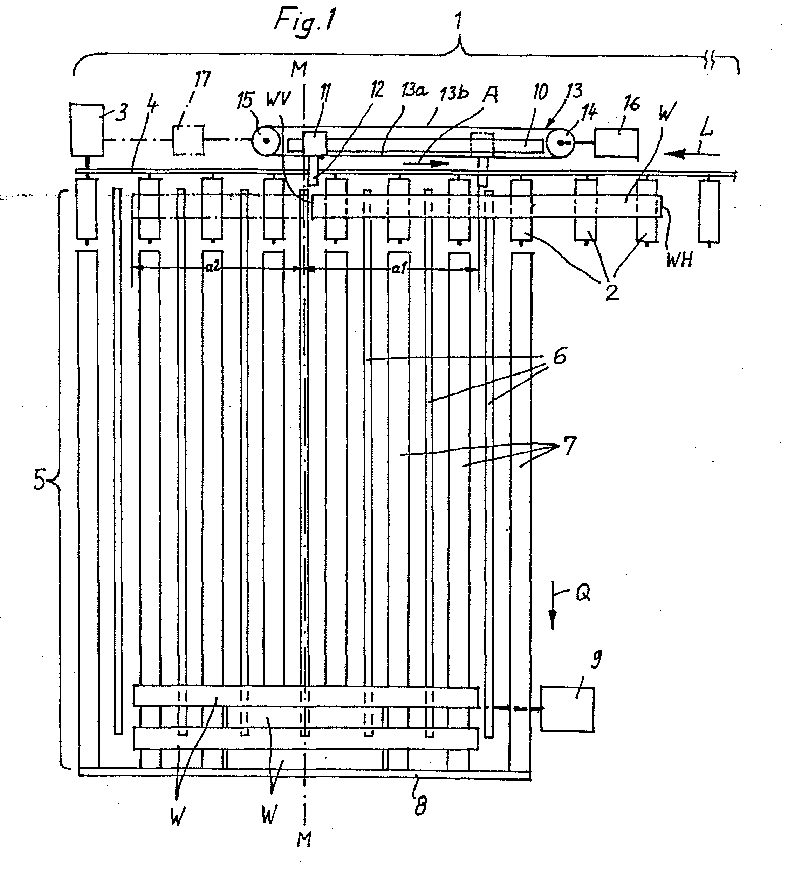

Wenn der Endschalter 12 das vordere Ende WV des Werkstückes ertastet hat, wird durch den Endschalter 12 der dritte Antriebsmotor 16 eingeschaltet, der dann über die Umlenkscheibe 14 und das endlose Zugglied 13 den Schlitten 11 in einer Richtung A entgegengesetzt zur Förderrichtung L des Längsförderers 1 mit einer Geschwindigkeit antreibt, die genauso groß ist wie die Fördergeschwindigkeit des Längsförderers 1. Der Endschalter 12
bewegt sich dabei aus seiner in Figur 1 voll ausgezeichneten Ausgangsstellung in Richtung A nach rechts entgegengesetzt zur Bewegungsrichtung des Werkstückes W.
Er tastet dabei das Werkstück W ab. Sobald der Endschalter 12 das hintere Ende WH des Werkstückes ertastet hat,
setzt er den ersten Antriebsmotor 3 des Längsförderers 1
still und schaltet, gegebenenfalls mit einer gewissen
Verzögerung, den zweiten Antriebsmotor 9 des Querförderers 5 ein. Außerdem wird auch die Drehrichtung des
dritten Antriebsmotors 16 umgeschaltet, so daß der Endschalter 12 in seine Ausgangsposition in der Nähe der
Längsmittelebene M-M zurückbewegt wird.

Wenn der Endschalter das hintere Ende WH des Werkstückes
W ertastet, hat er gegenüber der Längsmittelebene M einen
Weg a1 zurückgelegt, während das vordere Ende WV des
Werkstückes W in der gleichen Zeit den Weg a2 zurücklegte. Da die Geschwindigkeit des Endschalters 12 der Fördergeschwindigkeit des Längsförderers 1 entspricht,
sind beide Wege a1 und a2 gleich groß. Infolgedessen
befindet sich bei Abschaltung des ersten Antriebsmotors 3
die Mitte des jeweils transportierten Werkstückes W im
Bereich der Längsmittelebene M-M des Querförderers 5.

Wegen der Trägheit des Antriebssystems des Längsförderers
und auch des Antriebssystems des Schlittens 11 ist es
vorteilhaft, wenn sich der Endschalter 12 in seiner Ausgangsposition nicht genau auf der Längsmittelebene M-M
befindet, sondern entgegengesetzt zur Förderrichtung L
in Richtung A etwas versetzt angeordnet ist, wobei er
sich in seiner Ausgangsposition, jedoch immer noch in
der Nähe dieser Längsmittelebene M-M befindet. Auf diese Weise wird das vordere Ende WV des Werkstückes W etwas früher ertastet. Durch die Trägheit des Antriebssystems des Schlittens 11 wird jedoch dieser erst in Gang gesetzt wenn sich das vordere Ende WV in etwa auf der Längsmittelebene M-M oder noch etwas davor befindet. Der Endschalter 12 hat dann auch, wenn er das hintere Ende WH des Werkstückes ertastet, gegenüber der Längsmittelebene M-M einen etwas größeren Weg zurückgelegt als das vordere Ende WV des Werkstückes W. Bis jedoch von dem Augenblick der Ertastung des hinteren Endes WH der Antriebsmotor 3 tatsächlich stillsteht und damit die Bewegung des Werkstückes in Richtung L beendet ist, vergeht noch ein kleiner Zeitraum, innerhalb dessen das Werkstück weiterbewegt wird, so daß sich dann die Werkstücksmitte auf der Längsmittelebene M-M befindet.

Durch das Einschalten des zwiten Antriebsmotors 9 wird dann das Werkstück W von dem Längsförderer L durch die Transportleisten 6 abgehoben, um einen Schritt in Richtung Q weiterbewegt und anschließend auf den Ablageleisten 7 abgesetzt. Dieser Vorgang des Längs- und Quertransportes von Werkstücken wiederholt sich mehrfach, wobei jedoch jedes einzelne Werkstück, unabhängig von seiner Länge, durch die beschriebene verschiebbare Lagerung der Fotozelle 12 stets so ausgemittelt wird, daß sich seine Werkstücksmitte im Bereich der Längsmittelebene M-M des Querförderers 5 befindet. Wenn die Werkstücke den Festanschlag 8 erreicht haben, stauen sie sich dann in gewünschter Weise an diesem Festanschlag, damit im Bereich des Festanschlages jeweils zusammengehörige Werkstücke, beispielsweise die vier Rahmenteile für einen Fensterrahmen zur Abnahme zur Verfügung stehen. Da die Werkstücke unabhängig von ihrer Länge stets gegenüber der Längsmittelebene M-M ausgemittelt sind, halten sie während des Quertransports und beim Stau an dem Festanschlag 8 stets ihre zueinander und zum Festanschlag 8 parallele Lage bei.

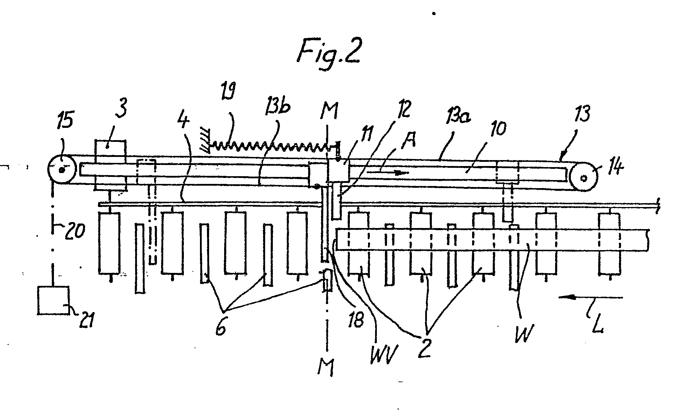

Anstelle eines eigenen Antriebsmotors 16 könnte der Antrieb für den den Endschalter 12 tragenden Schlitten 11 auch von dem ersten Antriebsmotor 3 erfolgen. Zu diesem Zweck müßte zwischen dem ersten Antriebsmotor 3 und einer der beiden Umlenkscheiben 14, 15 eine Antriebsverbindung mit einer zwischengeschalteten Kupplung 17 vorgesehen sein. Diese Kupplung 17 ist von dem Endschalter 12 steuerbar. Sobald der Endschalter 12 das vordere Ende VW des Werkstückes ertastet, wird die Kupplung 17 eingeschaltet und damit die Umlenkscheibe 15 angetrieben. Beim Ertasten des hinteren Endes WH des Werkstückes W wird die Kupplung 17 wieder ausgeschaltet. Über eine in Figur 1 nicht dargestellte Feder kann ähnlich wie beim in Figur 2 dargestellten Ausführungsbeispiel der den Endschalter 12 tragende Schlitten 11 wieder in seine Ausgangsposition zurückbewegt werden.

Das in Figur 2 dargestellte Ausführungsbeispiel unterscheidet sich von den vorherbeschriebenen Ausführungsbeispielen lediglich durch den Antrieb des den Endschalter 12 tragenden Schlittens 11. Bei dem in Figur 2 dargestellten Ausführungsbeispiel ist wiederum das eine Trum 13a des endlosen Zuggliedes 13 mit dem Schlitten 11 verbunden. Das andere Trum 13b trägt einen in den Förderbereich des Längsförderers 1 hineinragenden Mitnehmer 18. Dieser Mitnehmer 18 arbeitet mit dem vorderen Ende WV des Werkstückes W zusammen. In Ausgangsposition befindet sich der Mitnehmer 18 etwa in der Längsmittelebene M-M. Wenn das vordere Ende WV des Werkstückes W am Mitnehmer 18 anstößt, wird dieser in Förderrichtung L nach links bewegt. Über das endlose Zugglied 13 wird dann der Schlitten 11 in Richtung A angetrieben und bewegt sich entgegengesetzt zur Förderrichtung L nach rechts. Der Endschalter 12 schaltet bei Erreichen des hinteren Endes WH in der vorher beschriebenen Weise wieder den ersten Antriebsmotor 1 des Längsförderers aus und den zweiten Antriebsmotor 9 des Querförderers ein.

Der Querförderer hebt dann das Werkstück W von dem Längsförderer ab und setzt es in der vorherbeschriebenen Weise auf den Ablageleisten 7 ab. Hierdurch wird der Mitnehmer 18 freigegeben. Eine Rückführeinrichtung in Form einer Zugfeder 19, einer nicht dargestellten, mit der Welle einer der beiden Umlenkscheiben 14, 15 zusammenwirkenden Spiralfeder oder auch eines Gewichtes 21, welches an einem Seilzug 20 hängt, der auf einer nicht dargestellten, mit der Umlenkscheibe verbundenen Trommel aufgewickelt ist, wird dann der vom Schlitten 11 getragene Endschalter 12 wieder in seine Ausgangsposition zurückbewegt.

Patentansprüche

1. Transportvorrichtung für längliche Werkstücke unterschiedlicher Länge, insbesondere für Rahmenteile für Fenster- und Türrahmen, bestehend im wesentlichen aus einem von einem ersten Antriebsmotor angetriebenen Längsförderer, auf welchem die Werkstücke nacheinander in ihrer Längsrichtung transportiert werden, und aus einem an einer Übergabestation an diesen senkrecht anschließenden, von einem zweiten Antriebsmotor angetriebenen Querförderer, auf welchem mehrere Werkstücke gleichzeitig quer zu ihrer Längsrichtung bis gegen einen an einer Abgabestation angeordneten Festanschlag transportiert werden, wobei im Bereich des Längsförderers ein von dem jeweils auf diesem transportierten Werkstück betätigbarer Endschalter vorgesehen ist, der in Abhängigkeit von einer vorbestimmten Stellung des jeweils transportierten Werkstückes den ersten Antriebsmotor stillsetzt und den zweiten Antriebsmotor einschaltet, dadurch gekennzeichnet, daß der Endschalter (12) parallel zum Längsförderer (1) verschiebbar gelagert ist, daß zur Verschiebung des Endschalters (12) ein Antrieb (13-16;17;18) vorgesehen ist, der von dem vorderen Ende (WV) des jeweils auf dem Längsförderer (1) transportierten Werkstückes (W) eingeschaltet wird, sobald dessen vorderes Ende (WV) etwa die Längsmittelebene (M-M) des Querförderers (5) erreicht hat, und der den Endschalter (12) von seiner Ausgangsposition in der Nähe der Längsmittelebene (M-M) entgegengesetzt zur Förderrichtung (L) des Längsförderers (1) mit einer dessen Fördergeschwindigkeit entsprechenden Geschwindigkeit verschiebt, daß der Endschalter (12) bei seiner Verschiebung das jeweils transportierte Werkstück (W) abtastet und beim Ertasten dessen hinteren Endes (WH) den ersten Antriebsmotor (3) stillsetzt und den zweiten Antriebsmotor (9) einschaltet und daß eine Rückführeinrichtung (16,19,20,21) vorgesehen ist, welche den Endschalter (12) anschließend wieder in seine Ausgangsposition zurück verschiebt.

2. Vorrichtung nach Anspruch 1, dadurch gekennzeichnet, daß der Antrieb (13-16,17) des Endschalters (12) durch diesen einschaltbar ist, sobald der Endschalter (12) in seiner Ausgangsposition das vordere Ende (WV) des jeweils transportierten Werkstückes (W) ertastet.

3. Vorrichtung nach Anspruch 1 oder 2, dadurch gekennzeichnet, daß der Antrieb (13-16) des Endschalters (12) einen dritten Antriebsmotor (16) aufweist, der von dem Endschalter (12) steuerbar ist.

4. Vorrichtung nach Anspruch 1 oder 2, dadurch gekennzeichnet, daß der Antrieb des Endschalters (12) durch den ersten Antriebsmotor (3) unter Zwischenschaltung einer von dem Endschalter (12) steuerbaren Kupplung (17) erfolgt.

5. Vorrichtung nach mindestens einem der Ansprüche 1 - 4, dadurch gekennzeichnet, daß der Antrieb des Endschalters ein endloses, über zwei Umlenkscheiben (14,15) geführtes Zugglied (13) aufweist, dessen beide Trume (13a,13b) sich parallel zum Längsförderer (1) erstrecken und von denen ein Trum (13a) mit dem Endschalter (12) verbunden ist.

6. Vorrichtung nach Anspruch 3 oder 4 und 5, dadurch gekennzeichnet, daß der dritte Antriebsmotor (16) oder die Kupplung (17) mit einer der Umlenkscheiben (14,15) verbunden ist.

7. Vorrichtung nach Anspruch 5, dadurch gekennzeichnet, daß das andere Trum (13b) des endlosen Zuggliedes (13) einen in den Förderbereich des Längsförderers (1) hineinragenden, mit dem vorderen Ende (WV) des jeweils transportierten Werkstückes (W) zusammenwirkenden Mitnehmer (18) aufweist, der sich in Ausgangsposition des Endschalters (12) etwa in der Längsmittelebene (M-M) des Querförderers (5) befindet.

8. Vorrichtung nach einem der Ansprüche 1 - 7, dadurch gekennzeichnet, daß die Rückführeinrichtung eine Feder (19) oder ein Gewicht (21) aufweist.

9. Vorrichtung nach Anspruch 1, dadurch gekennzeichnet, daß der Endschalter (12) auf einem Schlitten (11) angeordnet ist, der an einer sich parallel zur Förderrichtung (L) des Längsförderers (1) erstreckenden Führungsbahn (10) beweglich gelagert ist.

Fig.1

Fig.2

Europäisches
Patentamt

# EUROPÄISCHER RECHERCHENBERICHT

| EINSCHLÄGIGE DOKUMENTE | | | EP 83111173.7 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) | |
| D,A | <u>DE - A1 - 2 835 862</u> (JENKER) <br> -- | | B 65 G 47/32 <br> B 65 G 47/54 | |
| A | <u>DE - A1 - 2 514 782</u> (JAATINEN) <br> -- | | | |
| D,A | <u>DE - C3 - 2 201 613</u> (FENDT) <br> ---- | | | |
| | | | **RECHERCHIERTE SACHGEBIETE (Int. Cl. ³)** | |
| | | | B 65 G 47/00 <br> B 27 M 3/00 | |

Der vorliegende Recherchenbericht wurde für alle Patentansprüche erstellt.

| Recherchenort | Abschlußdatum der Recherche | Prüfer |
|---|---|---|
| WIEN | 27-02-1984 | PISSENBERGER |